(19) Europäisches Patentamt / European Patent Office / Office européen des brevets

(11) **EP 2 843 784 B1**

(12) **EUROPÄISCHE PATENTSCHRIFT**

(45) Veröffentlichungstag und Bekanntmachung des Hinweises auf die Patenterteilung:
**09.02.2022 Patentblatt 2022/06**

(21) Anmeldenummer: **14177823.3**

(22) Anmeldetag: **21.07.2014**

(51) Internationale Patentklassifikation (IPC):
*H02J 1/10* (2006.01)    *H02J 7/34* (2006.01)
*H02J 9/06* (2006.01)    *H02P 29/02* (2016.01)
*B60L 1/00* (2006.01)    *F16C 32/06* (2006.01)

(52) Gemeinsame Patentklassifikation (CPC):
**B60L 1/003; B60L 50/40; B60L 58/20;**
**H02J 7/1423; H02J 7/345; H02P 29/025;**
B60L 2200/26; B60L 2210/10; B60L 2210/40;
B60L 2220/50; B60L 2240/34; Y02T 10/64;
Y02T 10/70; Y02T 10/72

(54) **Antriebsschaltung für Luftlagermotor**

Drive circuit for air bearing motors

Commutation d'entraînement pour un moteur monté sur coussin d'air

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2013 DE 102013014427**

(43) Veröffentlichungstag der Anmeldung:
**04.03.2015 Patentblatt 2015/10**

(73) Patentinhaber: **Liebherr-Elektronik GmbH**
**88131 Lindau (DE)**

(72) Erfinder:
• **Mahdavi, Dr.-Ing. Nejat**
**88131 Lindau (DE)**

• **Cremer, Dr.-Ing. Ralf**
**88131 Lindau (DE)**
• **Brodeau, Pierre**
**31400 Toulouse (FR)**

(74) Vertreter: **Laufhütte, Dieter**
**Lorenz Seidler Gossel**
**Rechtsanwälte Patentanwälte**
**Partnerschaft mbB**
**Widenmayerstraße 23**
**80538 München (DE)**

(56) Entgegenhaltungen:
WO-A2-2013/028507     DE-A1- 19 921 146
DE-A1-102009 014 386     US-A1- 2009 179 616

**Beschreibung**

Die Erfindung betrifft eine Antriebsschaltung für einen Elektromotor mit aerodynamischer Lagerung der Motorwelle.

Luftlager sind Lager, bei denen zwei sich gegeneinander bewegende Partner durch einen dünnen Luftfilm getrennt sind. Dadurch erlauben sie eine nahezu reibungsfreie Relativbewegung.

Die Luftlagerung kann insbesondere bei Elektromotoren Anwendung finden, bei denen die angetriebene Motorwelle, d. h. der Rotor, durch einen Luftspalt im Motorgehäuse gelagert ist. Bei Luftlagern unterscheidet man zwischen statischen Lagern und dynamischen Lagern. Bei statischen Lagern wird der Luftspalt durch Einleitung einer Druckluft durch externe Mittel erzeugt. Dynamische Lager benötigen keine Druckluftversorgung, da die im Luftspalt benötigte Druckluft durch Eigenbewegung erzeugt wird. Hier besteht jedoch das Problem, dass sich die beiden zueinander bewegenden Lagerteile unterhalb einer charakteristischen Relativdrehzahl berühren können und damit Verschleiß und erhöhter Reibung unterliegen. Anwendung finden luftgelagerte Motoren beispielsweise bei Klimaanlagen, vor allem bei Klimaanlagen für Schienenfahrzeuge. Die luftgelagerten Motoren sind an einen Kompressor gekoppelt und treiben diesen an. Da die Klimaanlage wie andere Verbraucher innerhalb des Schienenfahrzeuges von der Versorgungsspannung der Oberleitung gespeist werden, kann diese Spannungsversorgung kurzzeitig an gewissen Übergangsstellen unterbrochen sein. Je nach Unterbrechungsdauer kann dies dazu führen, dass sich die Drehzahl der luftgelagerten Motoren in Klimaanlagen schlagartig bis hin zum Stillstand reduziert und nicht genügend Druckluft für das Luftlager erzeugt werden kann. Dadurch entstehen schädliche Reibungen innerhalb der Luftlager und die Lebensdauer des Motors wird stark reduziert.

Aus der WO 2013/028507 A2 ist ein Elektromotor mit Luftlagerung bekannt. Die eingesetzte Antriebsschaltung umfasst jedoch keinen Mechanismus zur Aufrechterhaltung der Luftlagerung bei Ausfall der Versorgungsspannung. Die DE 199 21 146 A1 beschäftig sich allgemein mit einer Notstromversorgung. Hier sollen bei Ausfall bzw. der Unterbrechung der Hauptstromversorgung alle sicherheitsrelevanten Betriebsaggregate aus einem Speichermittel versorgen zu können.

Die vorliegende Erfindung stellt sich daher die Aufgabe, eine Lösung aufzuzeigen, die bei einer kurzzeitigen bzw. gewissen Unterbrechung der Versorgungsspannung den Abfall des Luftdrucks und der Drehzahl innerhalb des luftgelagerten Motors verhindert und folglich den Verschleiß des Luftlagers reduziert.

Diese Aufgabe wird durch eine Antriebsschaltung gemäß den Merkmalen des Anspruchs 1 gelöst. Vorteilhafte Ausgestaltungen der Antriebsschaltung sind Gegenstand der sich an den Hauptanspruch anschließenden Ansprüche.

Gemäß Anspruch 1 wird eine Antriebsschaltung für einen Elektromotor mit aerodynamischer Lagerung der Motorwelle bzw. Rotorwelle vorgeschlagen. Erfindungsgemäß sieht die Antriebsschaltung wenigstens ein Speichermittel zur Speicherung elektrischer Energie vor. Die gespeicherte Energie des wenigstens einen elektrischen Speichermittels soll nun dazu genutzt werden, einen Notfallbetrieb des Elektromotors bei einem Ausfall der eigentlichen Versorgungsspannung aufrecht zu erhalten. Der Elektromotor ist daher bei einem Spannungsausfall über die gespeicherte elektrische Energie des wenigstens einen Speichermittels zumindest zeitweise speisbar, um eine Mindestdrehzahl der Motorbzw. Rotorwelle beibehalten zu können. Die Mindestdrehzahl ist so gewählt, dass gerade noch für eine zufriedenstellende Luftlagerung der Motorwelle gesorgt ist.

In einer Ausführungsform der Erfindung umfasst die Antriebsschaltung einen Gleichstromzwischenkreis zur Versorgung des Elektromotors mit elektrischer Energie. Wenigstens ein elektrisches Speichermittel ist sodann Bestandteil des Zwischenkreises. Bei Ausfall der Zwischenkreisspannung übernimmt das wenigstens eine elektrische Speichermittel die Energieversorgung des Elektromotors.

Der Elektromotor kann als Wechselstrommotor ausgeführt sein und wird sodann mittels eines Umrichters aus der Zwischenkreisspannung gespeist. Der Umrichter dient zur Regelung der Motordrehzahl.

Sinnvollerweise kann das wenigstens eine Speichermittel durch die Versorgungsspannung bzw. die Zwischenkreisspannung während des regulären Betriebs aufladbar sein. Bei ausreichender Spannungsversorgung wird das wenigstens eine Speichermittel bis zu einem bestimmten Spannungspegel aufgeladen. Damit wird sichergestellt, dass bei einem späteren Spannungsausfall der Versorgungsspannung bzw. der Zwischenkreisspannung ausreichend elektrische Energie im Speichermittel zur Verfügung steht.

Erfindungsgemäß ist eine Steuerung vorgesehen, die einen Spannungsausfall der Versorgungsspannung bzw. der Zwischenkreisspannung erkennt und in diesem Fall auf die Notversorgung des Elektromotors durch das wenigstens eine Speichermittel umschaltet. Dies kann ein aktiver Schaltvorgang eines bestimmten Bauteils sein. Alternativ besteht die Möglichkeit, dass das wenigstens eine Speichermittel derart mit dem Elektromotor verschaltet ist, dass bei einer Unterbrechung der Versorgungsspannung automatisch Energie aus dem wenigstens einen Speichermittel an den Elektromotor bereitstellbar ist.

Die Antriebsschaltung kann vorzugsweise derart ausgeführt sein, dass diese weiterhin eine Stabilisierung der Zwischenkreisspannung während eventuell auftretender Fluktuationen in der Versorgungsspannung bzw. Zwischenkreisspannung ermöglicht. Vorzugsweise kann die Steuerung der Antriebsschaltung derart ausgeführt sein, dass diese ein Unterschreiten eines vordefinierten unteren Grenzwertes der Zwischenkreisspannung erkennt. In diesem Fall ist aus dem wenigstens einen Speichermittel automatisch elektrische Energie bereitstellbar, um die Spannungsversorgung des Elektromotors zu unterstützen. Dadurch kann die Zwischenkreisspannung nahezu konstant gehalten werden.

Der wenigstens eine luftgelagerte Elektromotor umfasst abtriebsseitig wenigstens ein Kupplungsmittel. Erfindungsgemäß umfasst die Steuerung der Antriebsschaltung entsprechende Mittel zur Betätigung dieser Kupplung, um den Motor im Notfall, d. h. bei Ausfall der Versorgungsspannung bzw. Zwischenkreisspannung, lastfrei zu schalten. Dadurch werden optimale Motorbetriebsverhältnisse geschaffen, um bei einer Versorgungsunterbrechung eine möglichst lange Speisung des Motors aus dem Speichermittel gewährleisten zu können.

Das wenigstens eine elektrische Speichermittel kann ein Niedervoltspeicher oder alternativ ein Hochvoltspeicher sein. Geeignete Ausführungen des elektrischen Speichermittels umfassen wenigstens einen Doppelschichtkondensator und/oder wenigstens eine wiederaufladbare chemische Batteriezelle, beispielsweise eine LiIonen Zelle.

In einer bevorzugten Ausführungsform kann ein Messmittel zur Erfassung der Temperatur des wenigstens einen Speichermittels vorgesehen sein. Optimalerweise kann sodann die Ladespannung des wenigstens einen Speichermittels in Abhängigkeit der gemessenen Temperatur bestimmt bzw. begrenzt werden. Insbesondere beim Einsatz von Doppelschichtkondensatoren ist die Lebensdauer der Kondensatorzellen von der Umgebungsdauer und der angelegten Spannung abhängig. Je höher die Temperatur und die gewählte Ladespannung sind, umso stärker verkürzt sich die Lebensdauer der Zellen. Um die Lebensdauer der Zellen von der Umgebungstemperatur zu entkoppeln, wird die Speichertemperatur gemessen und die Höhe der Ladungsspannung des wenigstens einen Speichermittels unter Berücksichtigung der gemessenen Temperatur angepasst.

Idealerweise werden die Zellenspannungen um ca. 0,1V pro 10°C Temperaturerhöhung reduziert. Auf diese Weise wird der Einfluss der Temperatur auf die Zellenlebensdauer deutlich kompensiert. Die Erfindung soll jedoch nicht auf die angeführten beispielhaften Werte begrenzt sein.

Wird als Speichermittel ein Niedervoltspeicher verwendet, so kann dieser mit der Versorgungsspannung bzw. dem Zwischenkreis über einen bidirektionalen DC/DC-Wandler verschaltet sein. Für den Ladevorgang des Speichers durch die Zwischenkreisspannung bzw. Versorgungsspannung arbeitet der DC/DC-Wandler im Tiefsetzbetrieb. Beim Ausfall der Versorgungsspannung ist der DC/DC-Wandler in den Hochsetzbetrieb schaltbar. Der Luftlagermotor ist sodann aus dem Niedervoltspeicher versorgbar. In dieser Ausführungsform muss der DC/DC-Wandler zwischen dem Niedervoltspeicher und dem Hochvolt-Zwischenkreis galvanisch getrennt sein.

In einer einfacheren Ausführungsform ist das wenigstens eine Speichermittel als Hochvoltspeicher ausgeführt. In diesem Fall ist eine galvanische Trennung des bidirektionalen DC/DC-Wandler zwischen Zwischenkreis und Speichermittel nicht notwendig, was zu einer erheblichen Vereinfachung der Komplexität des Gesamtsystems führt.

In einer weiteren vorteilhaften Ausgestaltung der Erfindung ist das wenigstens eine Speichermittel ein Hochvoltspeicher und über einen unidirektionalen DC/DC-Wandler mit der Versorgungsspannung bzw. mit dem Zwischenkreis verschaltet. Der DC/DC-Wandler dient zur Aufladung des wenigstens einen Speichermittels mit der Versorgungsspannung bzw. dem Zwischenkreis. Vorzugsweise arbeitet der DC/DC-Wandler dabei im Tiefsetzbetrieb.

Weiterhin kann der elektrische Speicher über eine Diode mit dem Luftlagermotor verschaltet sein. Bei Ausfall der Versorgungsspannung bzw. der Zwischenkreisspannung wird der Motor automatisch über die Diode aus dem wenigstens einen Speichermittel mit elektrischer Energie gespeist.

Alternativ besteht die Möglichkeit, auf die Verwendung eines DC/DC-Wandlers zu verzichten. Anstelle des unidirektionalen DC/DC-Wandlers findet dann ein Widerstandelement Verwendung, über das der wenigstens eine Speicher mit der Versorgungsspannung bzw. dem Zwischenkreis in Verbindung steht. Über das Widerstandelement kann der Ladestrom aus dem Zwischenkreis begrenzt werden. Es besteht die Möglichkeit, den Widerstandswert vorab fest zu definieren oder ein variables Widerstandelement mit einstellbarem Widerstandswert zu verwenden.

Die Aufladung des Speichermittels erfolgt über das Widerstandselement, während bei einem Ausfall der Versorgungsspannung bzw. der Zwischenkreisspannung der Elektromotor über eine Diode aus dem Speicher gespeist wird. Sinnvollerweise ist das Widerstandselement als geschaltetes Widerstandselement ausgeführt, sodass der Ladevorgang bedarfsweise gestoppt werden kann, vorzugsweise dann, wenn die Speicherspannung des Speichermittels einen vordefinierten Spannungspegel erreicht hat.

Die vorgesehene Steuerung dient zur Steuerung der DC/DC-Wandler bzw. zur Steuerung des Widerstandselementes. Die Steuerung übernimmt optional die Umschaltung der bidirektionalen Wandler zwischen Hochsetz- bzw. Tiefsetzbetrieb.

Weiterhin ist es zweckmäßig, wenn das wenigstens eine Speichermittel von der Steuerung überwachbar ist und dessen Speicherspannung detektierbar ist. In Abhängigkeit der gemessenen Speicherspannung kann die Steuerung den DC/DC-Wandler bzw. das schaltbare Widerstandselement betätigen, um den Ladeprozess in Abhängigkeit der Speicherspannung zu steuern bzw. zu unterbrechen.

Weiterhin ist die Steuerung dazu geeignet, die Motordrehzahl über einen dem Elektromotor vorgeschalteten Umrichter zu steuern bzw. zu regeln. Die Steuerung bzw. Regelung steht folglich mit einer entsprechenden Sensorik zur Erfassung der Motordrehzahl in Verbindung.

Gemäß einer weiteren vorteilhaften Ausgestaltung der Erfindung kann der Umrichter bei einer Unterbrechung der Versorgungsspannung/Zwischenkreisspannung ebenfalls zumindest kurzzeitig durch das wenigstens eine Speichermittel mit Energie versorgbar sein. Der Umrichter benötigt beispielsweise elektrische Energie zum Betrieb der Treiberschaltung bzw. Sensorik. Bevorzugt ist eine Ausführungsform der Antriebsschaltung, bei der ein DC/DC-Wandler kleiner Leistung parallel an das wenigstens eine Speichermittel geschaltet ist, um die für den Umrichter benötigte Versorgungsspannung während der Unterbrechung der Versorgungsspannung/Zwischenkreisspannung aus dem wenigstens einen Speichermittel bereitzustellen und einen autonomen Betrieb der Antriebsschaltung zu sichern.

Neben der Antriebsschaltung betrifft die Erfindung eine Klimaanlage mit einem luftgelagerten Motor zum Antrieb eines Kompressors und einer Antriebsschaltung gemäß der vorliegenden Erfindung bzw. einer vorteilhaften Ausgestaltung der Antriebsschaltung. Die Klimaanlage zeichnet sich folglich durch dieselben Vorteile und Eigenschaften aus, wie die erfindungsgemäße Antriebsschaltung. Auf eine wiederholende Beschreibung wird daher verzichtet.

Der Elektromotor steht mit dem Kompressor vorzugsweise über ein Kupplungsmittel in Verbindung, das bei einer Unterbrechung der Versorgungsspannung den Elektromotor lastfrei schaltet.

Die Klimaanlage dient insbesondere zum Einsatz bei Schienenfahrzeugen, wobei die Versorgungsspannung vorzugsweise durch eine Oberleitung bereitgestellt wird.

Weitere Vorteile und Eigenschaften der Erfindung sollen im Folgenden anhand mehrerer in den Zeichnungen dargestellter Ausführungsbeispiele erläutert werden. Es zeigen:

Figur 1:   Ein Schaltbild einer Antriebsschaltung zur Steuerung eines luftgelagerten Motors gemäß einer ersten erfindungsgemäßen Ausführungsform,

Figur 2:   die erfindungsgemäße Antriebsschaltung gemäß einer zweiten Ausführungsform,

Figur 3:   die erfindungsgemäße Antriebsschaltung gemäß einer dritten Ausführungsform,

Figur 4:   die erfindungsgemäße Antriebsschaltung gemäß einer vierten Ausführungsform und

Figur 5:   die erfindungsgemäße Antriebsschaltung gemäß Figur 4 mit einer Erweiterung zur Versorgung des Umrichters.

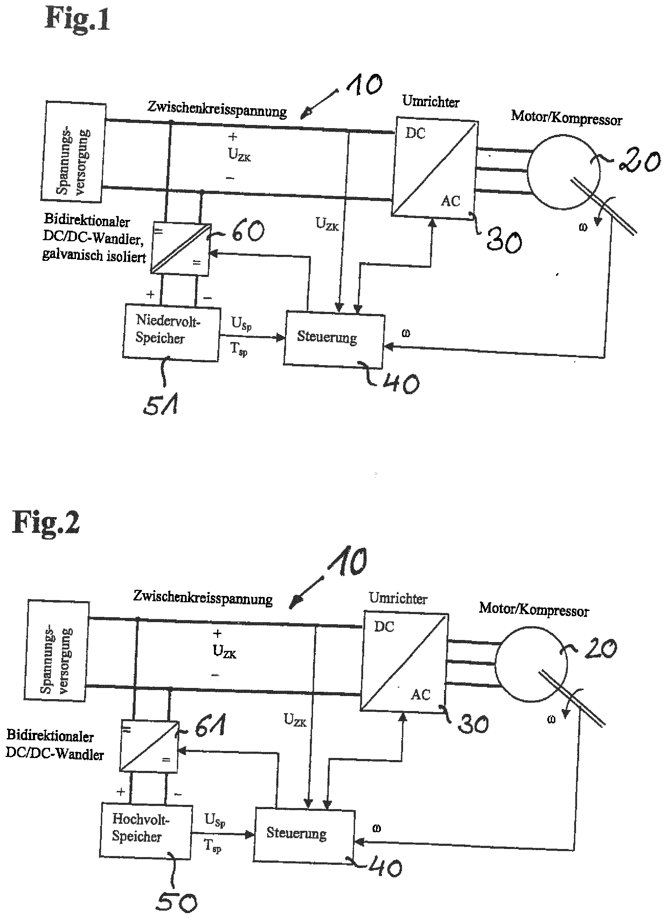

Alle fünf Schaltbilder der Figuren 1 bis 5 zeigen eine Antriebschaltung mit einem Zwischenkreis 10 zur Energieversorgung des Elektromotors 20. Der Motor 20 ist ein Elektromotor mit aerodynamischer Lagerung der Motorwelle, die zum Antrieb eines Klimaanlagenkompressors dient und mit diesem über eine nicht dargestellte Kupplung verbunden ist.

Bei dem Elektromotor 20 handelt es sich um einen Wechselstrommotor. Dem Motor 20 ist daher der Umrichter 30 vorgeschaltet, der die Gleichspannung $U_{ZK}$ des Zwischenkreises 10 in die erforderliche Wechselspannung zur Motorspeisung umrichtet. Zudem ist die Frequenz der erzeugten Wechselspannung zur Drehzahlregelung des Motors 20 einstellbar. Die gewünschte Ansteuerung des Umrichters 30 erfolgt durch die Steuerung 40 der Antriebsschaltung. Als Regelgröße dient die Drehgeschwindigkeit $\omega$ des Motors, die an der Motorwelle gemessen und an die Steuerung 40 übertragen wird. In Abhängigkeit der Soll-Drehzahl stellt die Steuerung 40 sodann die notwendige Frequenz des Umrichters 30 ein.

Der gezeigte Schaltaufbau mit einem luftgelagerten Motor 20 zum Antrieb eines Kompressors wird oftmals in Klimaanlagen für Schienenfahrzeuge eingesetzt. Die Klimaanlage wie auch andere Verbraucher werden innerhalb des Schienenfahrzeugs von der Oberleitung gespeist. Die Spannungsversorgung kann daher kurzzeitig an Übergangsstellen unterbrochen sein und ausfallen. Da der Motor 20 eine aerodynamische Lagerung aufweist, hängt die Wirkung des Luftlagers von der Drehzahl des Motors 20 ab. Unterschreitet die Drehzahl einen kritischen Grenzwert, kommt es zum Kontakt zwischen den Lagergegenstellen und es entstehen unerwünschte Reibungen innerhalb des Luftlagers, wodurch die Lebensdauer erheblich reduziert wird.

Aus diesem Grund wird erfindungsgemäß ein elektrischer Speicher 50, 51 in den Gleichspannungszwischenkreis 10 integriert, sodass die benötigte Energie während eines Spannungsausfalls der Zwischenkreisspannung $U_{ZK}$ für den störungsfreien Betrieb des luftgelagerten Motors 20 zur Verfügung gestellt werden kann. Die elektrische Energie des Speichermittels 50, 51 gewährleistet eine minimale Drehzahl des Motors 20, um den Luftdruck innerhalb des Luftlagers gerade noch aufrechterhalten zu können.

Während des Normalzustandes wird der luftgelagerte Motor von dem Spannungsversorgungssystem gespeist und gleichzeitig wird der Speicher 50, 51 auf die Zwischenkreisspannung $U_{ZK}$ geladen. Wird die Zwischenkreisspannung $U_{ZK}$ für kurze Zeit, beispielsweise an Übergangsstellen der Oberleitung, unterbrochen, erkennt die Steuerung 40 den Spannungsausfall und stellt die Energieversorgung des Motors 20 auf den Speicher 50, 51 um. Gleichzeitig wird der Luftlagermotor 20 von der Last entkoppelt. Dies erfolgt durch die abtriebsseitige nicht dargestellte Kupplung zwischen Motor 20 und Kompressor. Hierdurch werden optimale Betriebsbedingungen für den Luftlagermotor 20 geschaffen, um eine maximale Versorgungsdauer des Motors 20 aus dem Speichermittel und folglich eine möglichst lange Aufrechterhaltung der minimalen Drehzahl zu gewährleisten.

Der elektrische Speicher 50, 51 kann eine Vielzahl an Doppelschichtkondensatoren oder an wiederaufladbare Batteriezellen, wie beispielsweise Li-Ionen Zellen, umfassen.

Für die Integration des Speichers 50, 51 in den Zwischenkreis 10 bieten sich unterschiedliche Ausführungsvarianten an, die im Folgenden anhand der Figuren 1 bis 4 näher erläutert werden sollen. Vorab soll jedoch eine allgemeine Definition für die Dimensionierung des Speichers 50, 51 gegeben werden. Es wird vorausgesetzt, dass der minimale Energieverbrauch des Motors 20 während der Unterbrechungszeit $T$ gleich $E$ ist, wobei die Formel

$$E = P \cdot T$$

gilt und P die minimal erforderliche Leistung darstellt, damit der luftgelagerte Motor sich in einem sicheren Betriebszustand mit sicherer Drehzahl befindet. Die erforderliche Speicherkapazität C wird dann wie folgt berechnet:

$$E = P \cdot T = \frac{1}{2} C \left( U_{SP}^2 - U_{min}^2 \right)$$

Daraus folgt:

$$C = \frac{2P \cdot T}{U_{SP}^2 - U_{min}^2}$$

Wobei $U_{Sp}$ die Spannung des Speichers und $U_{min}$ die minimal erforderliche Zwischenkreisspannung für einen sicheren Motorbetrieb ist.

Figur 1 zeigt nun das Blockschaltbild des notbetriebsfähigen Antriebssystems, bei dem das Speichermittel als ein Niedervoltspeicher 51 ausgeführt ist. Die Integration des Speichermittels 51 in den Zwischenkreis 10 erfolgt über den bidirektionalen DC/DC-Wandler 60, der zudem eine galvanische Trennung zwischen der Zwischenkreisspannung $U_{ZK}$ und dem Niedervoltspeicher 51 schafft.

Befindet sich das Spannungsversorgungssystem im Normalzustand, wird dies von der Steuerung 40 erkannt und der Motor wird von der Spannungsversorgung, d.h. der Zwischenkreisspannung $U_{ZK}$ über den Umrichter 30 gespeist. Gleichzeitig wird der Niedervoltspeicher 51 durch den DC/DC-Wandler 60 aufgeladen, wobei dieser hierzu als Tiefsetzsteller arbeitet und die Zwischenkreisspannung $U_{ZK}$ mit höherer Voltzahl in eine niedrigere Gleichspannung für den Niedervoltspeicher 51 transformiert.

Beim Ausfall der Spannungsversorgung bzw. der Zwischenkreisspannung $U_{ZK}$ setzt die Steuerung 40 den DC/DC-Wandler 60 in den Hochsetzmodus, wodurch die Niedervoltspannung des Speichers 51 hochtransformiert wird und den Motor 20 über den Umrichter 30 mit elektrischer Energie zur Aufrechterhaltung der minimalen Drehzahl speist. Die notwendige Zwischenkreisspannung wird hier durch den Speicher 51 bereitgestellt.

Figur 2 zeigt ein gegenüber der Figur 1 modifiziertes Ausführungsbeispiel, bei dem anstatt eines Niedervoltspeichers 51 nun ein Hochvoltspeicher 50 Verwendung findet. Durch die Verwendung des Hochvoltspeichers 50 vereinfacht sich der Schaltaufbau, insbesondere die Einbindung des Speichers 50 in den Zwischenkreis 10. Durch den geringeren Spannungsunterschied muss der bidirektionale DC/DC-Wandler 61 keine galvanische Trennung zwischen der Zwischenkreisspannung $U_{ZK}$ und dem Spannungspegel des Hochvoltspeichers 50 sicherstellen.

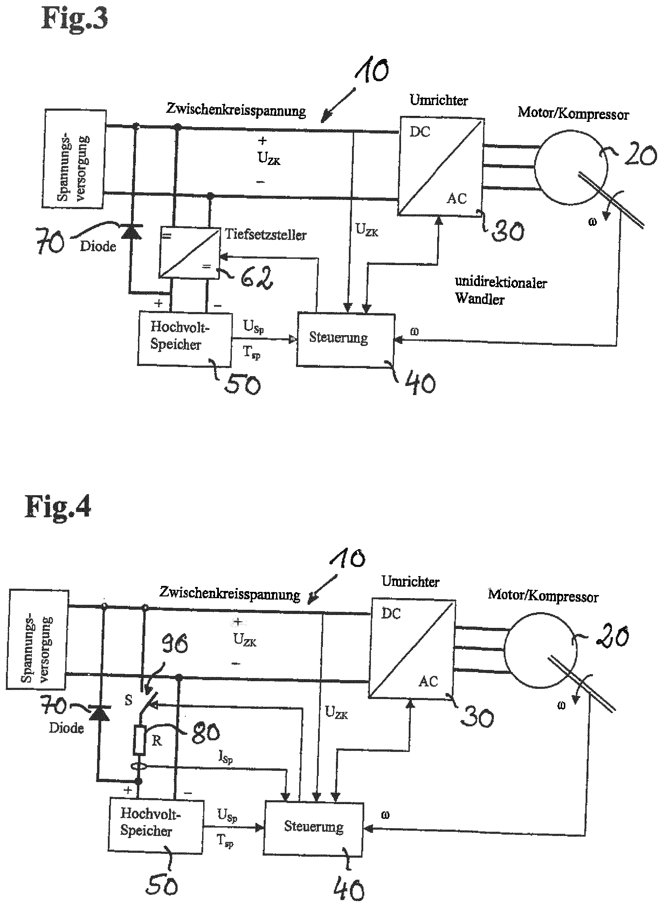

Im Ausführungsbeispiel der Figur 3 wird ebenfalls analog zur Figur 2 ein Hochvoltspeicher 50 als Speichermittel verwendet. Der DC/DC-Wandler 62 arbeitet nun ausschließlich unidirektional und zwar im Tiefsetzstellermodus. Dadurch wird die Zwischenkreisspannung $U_{ZK}$ auf die benötigte Spannung des Hochvoltspeichers 50 gesetzt. In der gezeigten Ausführung wird der Speicher 50 folglich während des Normalbetriebs durch die Zwischenkreisspannung $U_{ZK}$ aufgeladen, bis ein vordefinierter Spannungspegel erreicht wird. Nach Erreichen dieses Spannungspegels schaltet die Steuerung 40 den DC/DC-Wandler 62 ab.

Beim Ausfall der Zwischenkreisspannung $U_{ZK}$ wird der Aufladevorgang gestoppt und der Luftlagermotor 20 automatisch über die mit dem Zwischenkreis 10 in Flussrichtung verschaltete Diode 70 durch den Speicher 50 gespeist.

Im Ausführungsbeispiel der Figur 4 wird nunmehr vollständig auf den Einsatz eines DC/DC-Wandlers verzichtet. Stattdessen wird der Hochvoltspeicher 50 im Normalbetrieb über einen Widerstand 80 durch die Zwischenkreisspannung $U_{ZK}$ aufgeladen. Dem Widerstand 80 ist ein Schalter 90 vorgeschaltet, um den Aufladeprozess bei Erreichen einer vordefinierten Speicherspannung des Hochvoltspeichers 50 unterbrechen zu können. Die Steuerung 40 überwacht die Speicherspannung $U_{Sp}$ und öffnet gegebenenfalls den Schalter 90 sobald die gewünschte Spannung erreicht ist. Der Aufladeprozess wird sodann unterbrochen.

Beim Au der Zwischenkreisspannung $U_{ZK}$ versorgt der Hochvoltspeicher 50 automatisch über die in Flussrichtung mit dem Zwischenkreis 10 verschaltete Diode 70 den Motor 20 mit elektrischer Energie.

Der Widerstand 80 begrenzt den Ladestrom während der Aufladephase, insbesondere wenn der Speicher vollständig entladen ist. Der Widerstandswert R des Widerstandes 80 berechnet sich wie folgt:

$$R = \frac{U_{ZK}}{I_{SP\_Max}},$$

wobei $U_{ZK}$ die Zwischenkreisspannung und $I_{Sp\_Max}$ der maximal zulässige Ladestrom des Speichers 50 ist.

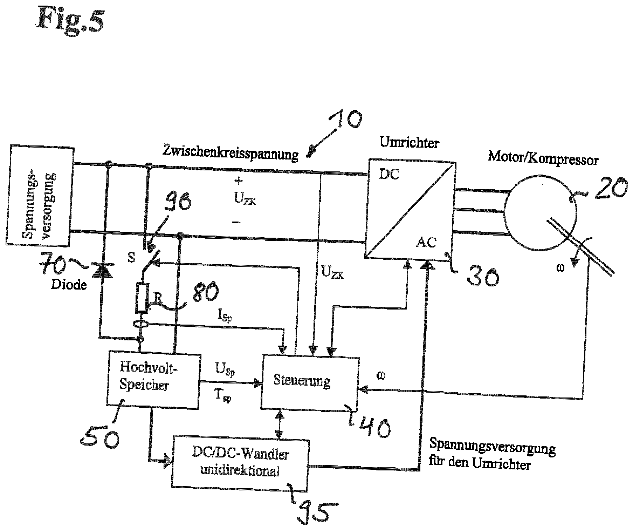

Das Ausführungsbeispiel gemäß Figur 5 entspricht grundsätzlich der Ausführung gemäß Figur 4. Zusätzlich ist der DC/DC-Wandler 95 kleiner Leistung parallel an den Hochvoltspeicher 50 geschaltet, um die für den Umrichter 30 notwendige Versorgungsspannung zum Betrieb der internen Treiberschaltung sowie Sensorik während einer Unterbrechung der Zwischenkreisspannung bereitzustellen und einen autonomen Betrieb der Antriebsschaltung zu sichern.

**Patentansprüche**

1. Antriebsschaltung für einen Elektromotor (20) mit aerodynamischer Lagerung der Motorwelle,

   wobei die Antriebsschaltung wenigstens ein Speichermittel (50, 51) zur Speicherung elektrischer Energie umfasst, durch das der Elektromotor (20) bei einem Ausfall der Versorgungsspannung bzw. Zwischenkreisspannung mit elektrischer Energie speisbar ist, um eine für die Luftlagerung notwendige Mindestdrehzahl der Motorwelle zumindest zeitweise zu erhalten, wobei
   eine Steuerung (40) vorgesehen ist, die einen Spannungsausfall erkennt und bei einem Ausfall der Versorgungsspannung auf die Notversorgung des Elektromotors (20) durch das wenigstens eine Speichermittel (50, 51) umschaltet **dadurch gekennzeichnet,**
   **dass** die Steuerung (40) bei einem Ausfall der Versorgungsspannung eine abtriebsseitige Kupplung des Elektromotors betätigt, um den Motor lastfrei zu schalten.

2. Antriebsschaltung nach Anspruch 1, **dadurch gekennzeichnet, dass** das wenigstens eine Speichermittel (50, 51) durch die Versorgungsspannung bzw. Zwischenkreisspannung aufladbar ist.

3. Antriebsschaltung nach Anspruch 2, **dadurch gekennzeichnet, dass** Mittel zur Messung der Temperatur des wenigstens einen Speichermittels (50, 51) vorgesehen sind und die Ladespannung des wenigstens einen Speichermittels (50, 51) in Abhängigkeit der gemessenen Temperatur wählbar ist.

4. Antriebsschaltung nach einem der vorhergehenden Ansprüche, **dadurch gekennzeichnet, dass** eine Steuerung (40) vorgesehen ist, die ein Unterschreiten der Versorgungsspannung/Zwischenkreisspannung einer Mindestspannung erkennt und das wenigstens eine Speichermittel (50, 51) zuschaltet, um die Zwischenkreisspannung konstant über den Mindestwert zu halten.

5. Antriebsschaltung nach einem der vorhergehenden Ansprüche, **dadurch gekennzeichnet, dass** das wenigstens eine elektrische Speichermittel einen Niedervoltspeicher (51) oder einen Hochvoltspeicher (50) umfasst.

6. Antriebsschaltung nach einem der vorhergehenden Ansprüche, **dadurch gekennzeichnet, dass** das wenigstens eine elektrische Speichermittel (50, 51) wenigstens einen Doppelschichtkondensator und/oder wenigstens eine wiederaufladbare chemische Batteriezelle, insbesondere eine Li-Ionen Zelle, umfasst.

7. Antriebsschaltung nach einem der vorhergehenden Ansprüche, **dadurch gekennzeichnet, dass** das wenigstens eine Speichermittel einen Niedervoltspeicher (51) umfasst und über einen bidirektionalen galvanisch getrennten DC/DC-Wandler (60) mit der Versorgungsspannung bzw. dem Zwischenkreis verschaltet ist.

8. Antriebsschaltung nach einem der vorhergehenden Ansprüche, **dadurch gekennzeichnet, dass** das wenigstens eine Speichermittel einen Hochvoltspeicher (50) umfasst und über einen bidirektionalen nicht galvanisch getrennten DC/DC-Wandler (61) mit der Versorgungsspannung bzw. dem Zwischenkreis verschaltet ist.

9. Antriebsschaltung nach einem der vorhergehenden Ansprüche, **dadurch gekennzeichnet, dass** das wenigstens eine Speichermittel einen Hochvoltspeicher (50) umfasst und über einen unidirektionalen DC/DC-Wandler (62) mit der Versorgungsspannung bzw. dem Zwischenkreis zum Aufladen des Speichermittels verschaltet ist und bei Ausfall der Versorgungsspannung/Zwischenkreisspannung der Speicher über eine Diode (70) den Elektromotor speist.

10. Antriebsschaltung nach einem der vorhergehenden Ansprüche, **dadurch gekennzeichnet, dass** das wenigstens eine Speichermittel einen Hochvoltspeicher (50) umfasst und über ein Widerstandselement (80), insbesondere ein geschaltetes Widerstandselement (80, 90), mit der Versorgungsspannung bzw. dem Zwischenkreis zum Aufladen des Speichermittels (50) verschaltet ist und bei Ausfall der Versorgungsspannung/Zwischenkreisspannung der Speicher (50) über eine Diode (70) den Elektromotor speist.

**11.** Antriebsschaltung nach einem der vorhergehenden Ansprüche, **dadurch gekennzeichnet, dass** der Ladezustand des wenigstens einen Speichermittels (50, 51) von der Steuerung (40) überwachbar ist und der DC/DC-Wandler (60, 61, 62) bzw. das schaltbare Widerstandselement (80, 90) in Abhängigkeit des Ladezustands durch die Steuereinheit (40) steuerbar ist.

**12.** Antriebsschaltung nach einem der vorhergehenden Ansprüche, **dadurch gekennzeichnet, dass** der Elektromotor (20) über einen Umrichter (30) durch die Versorgungsspannung/Zwischenkreisspannung gespeist ist und der Umrichter (30) vorzugsweise durch die Steuerung (40) in Abhängigkeit der erfassten Motordrehzahl steuerbar oder regelbar ist, wobei vorzugsweise der Umrichter (30) mit dem wenigstens einen Speichermittel (50) verbunden bzw. verbindbar ist, insbesondere über einen DC/DC-Wandler (95), um eine Notversorgung des Umrichters (30) bei Ausfall der Versorgungsspannung/Zwischenkreisspannung sicherzustellen.

**13.** Verwendung einer Antriebsschaltung gemäß einem der vorhergehenden Ansprüche für einen luftgelagerten Elektromotor (20).

**14.** Klimaanlage, insbesondere für ein Schienenfahrzeug, mit einem luftgelagerten Elektromotor (20) zum Antrieb eines Kompressors und einer Antriebsschaltung gemäß einem der vorangegangenen Ansprüche 1 bis 12, wobei der Elektromotor (20) über wenigstens ein Kupplungsmittel mit dem Kompressor verbunden ist und bei Ausfall der Versorgungsspannung/Zwischenkreisspannung abtriebsseitig von dem Kompressor entkuppelbar ist.

**Claims**

**1.** A drive circuit for an electric motor (20) having an aerodynamic support of the motor shaft,

wherein the drive circuit comprises at least one storage means (50,51) for storing electrical energy by which the electric motor (20) can be supplied with electrical energy on a failure of the supply voltage or intermediate circuit voltage to obtain a minimum speed of the motor shaft required for the air support at least at times; wherein a control (40) is provided which recognizes a voltage failure and switches to the emergency supply of the electric motor (20) by the at least one storage means on a failure. of the supply voltage.
**characterized in that**
the control (40) actuates a coupling of the electric motor at the output side on a voltage failure of the supply voltage to switch the motor load-free.

**2.** A drive circuit in accordance with claim 1, **characterized in that** the at least one storage means (50, 51) can be charged by the supply voltage or intermediate circuit voltage.

**3.** A drive circuit in accordance with claim 2, **characterized in that** means are provided for measuring the temperature of the at least one storage means (50, 51) and the charging voltage of the at least one storage means (50, 51) can be selected in dependence on the measured temperature.

**4.** A drive circuit in accordance with one of the preceding claims, **characterized in that** a control (40) is provided which recognizes a falling below of a minimum voltage by the supply voltage/intermediate circuit voltage and connects the at least one storage means (50, 51) to keep the intermediate circuit voltage constant over the minimum value.

**5.** A drive circuit in accordance with one of the preceding claims, **characterized in that** the at least one electrical storage means comprises a low voltage store (51) or a high voltage store (50).

**6.** A drive circuit in accordance with one of the preceding claims, **characterized in that** the at least one electrical storage means (50, 51) comprises at least one double layer capacitor and/or at least one rechargeable chemical battery cell, in particular an Li ion cell.

**7.** A drive circuit in accordance with one of the preceding claims, **characterized in that** the at least one storage means comprises a low voltage store (51) and is connected to the supply voltage or to the intermediate circuit via a bidirectional galvanically separated DC/DC converter (60).

**8.** A drive circuit in accordance with one of the preceding claims, **characterized in that** the at least one storage means comprises a high voltage store (50) and is connected to the supply voltage or to the intermediate circuit via a bidirectional DC/DC converter (61) not galvanically separated.

**9.** A drive circuit in accordance with one of the preceding claims, **characterized in that** the at least one storage means comprises a high voltage store (50) and is connected to the supply voltage or to the intermediate circuit for charging the storage means via a unidirectional DC/DC converter (62) and the store feeds the electric motor via a diode (70) on a failure of the supply voltage/intermediate circuit voltage.

**10.** A drive circuit in accordance with one of the preceding claims, **characterized in that** the at least one storage means comprises a high voltage store (50) and is connected via a resistor element (80), in particular a connected resistor element (80, 90), to the supply voltage or to the intermediate circuit for charging the storage means (50) and the store (50) feeds the electric motor via a diode (70) on a failure of the supply voltage/intermediate circuit voltage.

**11.** A drive circuit in accordance with one of the preceding claims, **characterized in that** the charge state of the at least one storage means(50, 51) can be monitored by the control (40) and the DC/DC converter(60, 61, 62) or the switchable resistor element (80, 90) can be controlled by the control unit (40) in dependence on the charge state.

**12.** A drive circuit in accordance with one of the preceding claims, **characterized in that** the electric motor (20) is fed via an inverter (30) by the supply voltage/intermediate circuit voltage and the inverter (30) can preferably be controlled or regulated by the control (40) in dependence on the detected motor speed, with the inverter being connected or connectable to the at least one storage means (50), in particular via a DC/DC converter (95), to ensure an emergency supply of the inverter (30) on a failure of the supply voltage/intermediate circuit voltage.

**13.** Use of a drive circuit in accordance with one of the preceding claims for an air-supported electric motor (20).

**14.** An air-conditioning system, in particular for a rail vehicle, comprising an air-supported electric motor (20) for driving a compressor and a drive circuit in accordance with one of the preceding claims 1 to 12, wherein the electric motor (20) is connected to the compressor via at least one coupling means and can be decoupled from the compressor at the output side on a failure of the supply voltage/intermediate circuit voltage.

**Revendications**

**1.** Commutation d'entraînement pour un moteur électrique (20) avec montage aérodynamique de l'arbre du moteur,

la commutation d'entraînement comprenant au moins un moyen de stockage (50, 51) pour le stockage d'énergie électrique, par lequel le moteur électrique (20) peut être alimenté en énergie électrique en cas de panne de la tension d'alimentation ou de la tension de circuit intermédiaire pour obtenir au moins temporairement une vitesse minimale de rotation de l'arbre du moteur nécessaire pour le coussin d'air,

un organe de commande (40) étant prévu, qui reconnaît une panne de courant et commute sur l'alimentation de secours du moteur électrique (20) par l'au moins un moyen de stockage (50, 51) en cas de panne de la tension d'alimentation **caractérisée en ce que**

en cas de panne de la tension d'alimentation, l'organe de commande (40) actionne un accouplement côté sortie du moteur électrique pour commuter le moteur en fonctionnement sans charge.

**2.** Commutation d'entraînement selon la revendication 1, **caractérisée en ce que** l'au moins un moyen de stockage (50, 51) peut être chargé par la tension d'alimentation ou la tension de circuit intermédiaire.

**3.** Commutation d'entraînement selon la revendication 2, **caractérisée en ce que** des moyens pour mesurer la température de l'au moins un moyen de stockage (50, 51) sont prévus et la tension de charge de l'au moins un moyen de stockage (50, 51) peut être choisie en fonction de la température mesurée.

**4.** Commutation d'entraînement selon l'une des revendications précédentes, **caractérisée en ce qu'**un organe de commande (40) est prévu, qui reconnaît un passage au-dessous d'une tension minimale par la tension d'alimentation / tension de circuit intermédiaire et met en circuit l'au moins un moyen de stockage (50, 51) pour maintenir la tension de circuit intermédiaire constante au-dessus d'une valeur minimale.

**5.** Commutation d'entraînement selon l'une des revendications précédentes, **caractérisée en ce que** l'au moins un moyen de stockage électrique comprend un accumulateur à basse tension (51) ou un accumulateur à haute tension (50).

**6.** Commutation d'entraînement selon l'une des revendications précédentes, **caractérisée en ce que** l'au moins un moyen de stockage électrique (50, 51) comprend au moins un condensateur à double couche et/ou au moins un élément de batterie chimique rechargeable, en particulier un élément lithium-ion.

**7.** Commutation d'entraînement selon l'une des revendications précédentes, **caractérisée en ce que** l'au moins un moyen de stockage comprend un accumulateur à basse tension (51) et est connecté à la tension d'alimentation ou au circuit intermédiaire par le biais d'un convertisseur DC-DC (60) bidirectionnel à isolation galvanique.

**8.** Commutation d'entraînement selon l'une des revendications précédentes, **caractérisée en ce que** l'au moins un moyen de stockage comprend un accumulateur à haute tension (50) et est connecté à la tension d'alimentation ou au circuit intermédiaire par le biais d'un convertisseur DC-DC (61) bidirectionnel sans isolation galvanique.

9. Commutation d'entraînement selon l'une des revendications précédentes, **caractérisée en ce que en ce que** l'au moins un moyen de stockage comprend un accumulateur à haute tension (50) et est connecté à la tension d'alimentation ou au circuit intermédiaire par le biais d'un convertisseur DC-DC (62) unidirectionnel pour charger le moyen de stockage et l'accumulateur alimente le moteur électrique par le biais d'une diode (70) en cas de panne de la tension d'alimentation / tension de circuit intermédiaire.

10. Commutation d'entraînement selon l'une des revendications précédentes, **caractérisée en ce que** l'au moins un moyen de stockage comprend un accumulateur à haute tension (50) et est connecté à la tension d'alimentation ou au circuit intermédiaire par le biais d'un élément de résistance (80), en particulier un élément de résistance (80, 90) couplé, pour charger le moyen de stockage (50) et l'accumulateur (50) alimente le moteur électrique par le biais d'une diode (70) en cas de panne de la tension d'alimentation / tension de circuit intermédiaire.

11. Commutation d'entraînement selon l'une des revendications précédentes, **caractérisée en ce que** l'état de charge de l'au moins un moyen de stockage (50, 51) peut être surveillé par l'organe de commande (40) et le convertisseur DC-DC (60, 61, 62) ou l'élément de résistance (80, 90) pouvant être couplé peut être commandé par l'unité de commande (40) en fonction de l'état de charge.

12. Commutation d'entraînement selon l'une des revendications précédentes, **caractérisée en ce que** le moteur électrique (20) est alimenté par la tension d'alimentation / tension de circuit intermédiaire par le biais d'un convertisseur de fréquence (30) et le convertisseur de fréquence (30) peut être commandé ou régulé de préférence par l'organe de commande (40) en fonction de la vitesse de rotation détectée du moteur, le convertisseur de fréquence (30) étant ou pouvant être de préférence relié à l'au moins un moyen de stockage (50), en particulier par le biais d'un convertisseur DC-DC (95), pour assurer une alimentation de secours du convertisseur de fréquence (30) en cas de panne de la tension d'alimentation / tension de circuit intermédiaire.

13. Utilisation d'une commutation d'entraînement selon l'une des revendications précédentes pour un moteur électrique (20) monté sur coussin d'air.

14. Installation de climatisation, en particulier pour un véhicule ferroviaire, comprenant un moteur électrique (20) monté sur coussin d'air pour entraîner un compresseur et une commutation d'entraînement selon l'une des revendications précédentes 1 à 12, le moteur électrique (20) étant relié au compresseur par le biais d'au moins un moyen d'accouplement et pouvant être découplé du compresseur côté sortie en cas de panne de la tension d'alimentation / tension de circuit intermédiaire.

EP 2 843 784 B1

**Fig.1**

**Fig.2**

10

## Fig.3

*10*

Zwischenkreisspannung

Umrichter

Motor/Kompressor

*20*

DC

$+$
$U_{ZK}$
$-$

AC

*30*

$\omega$

*70* Diode

Tiefsetzsteller

*62*

$U_{ZK}$

unidirektionaler Wandler

$+$ $-$

Hochvolt-Speicher

$U_{Sp}$
$T_{sp}$

Steuerung

$\omega$

*50*

*40*

## Fig.4

*10*

Zwischenkreisspannung

Umrichter

Motor/Kompressor

*20*

DC

$+$
$U_{ZK}$
$-$

AC

*30*

*96*

$\omega$

*70* Diode

S

R *80*

$I_{Sp}$

$U_{ZK}$

$+$ $-$

Hochvolt-Speicher

$U_{Sp}$
$T_{sp}$

Steuerung

$\omega$

*50*

*40*

# Fig.5

**EP 2 843 784 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2013028507 A2
- DE 19921146 A1